# FASCICULE DE BREVET EUROPEEN

(11) **EP 0 932 777 B1**
(45) Date de publication et mention de la délivrance du brevet: **10.04.2002**
(21) Numéro de dépôt: 97911307.3
(22) Date de dépôt: 20.10.1997
(51) Int. Cl.: F16H 61/02, B60H 1/32

(54) **PROCEDE DE CONTROLE DU COUPLE D'ENTREE D'UNE TRANSMISSION**
VERFAHREN ZUR REGELUNG DES GETRIEBEEINGANGSMOMENTES
METHOD FOR CONTROLLING GEARBOX INPUT TORQUE

(30) Priorité: 21.10.1996 FR 9612736
(43) Date de publication de la demande: 04.08.1999
(73) Titulaire: RENAULT, 92109 Boulogne-Billancourt (FR)
(72) Inventeur: BANCON, François, F-78100 Saint Germain en Laye (FR); LAGOUTTE, Jean, Louis, F-78280 Guyancourt (FR); ROUMY, Jean, Claude, F-78210 Saint Cyr l'Ecole (FR)
(74) Mandataire: Fernandez, Francis Lionel
(86) Numéro de dépôt international: FR9701882
(87) Numéro de publication internationale: WO9817928

(56) Documents cités:
- EP-A- 0 532 365
- DE-A- 4 240 762
- DE-A- 4 339 935
- US-A- 5 241 855
- PATENT ABSTRACTS OF JAPAN vol. 095, no. 006, 31 juillet 1995 & JP 07 076211 A (JATCO CORP), 20 mars 1995,
- PATENT ABSTRACTS OF JAPAN vol. 016, no. 242 (M-1259), 3 juin 1992 & JP 04 054232 A (MAZDA MOTOR CORP), 21 février 1992,

## Description

La présente invention se rapporte à la commande des transmissions, notamment de véhicule routier. Plus précisément, elle concerne un procédé de contrôle du couple d'une transmission automatique, semi-automatique ou robotisée, du type comportant une unité de calcul électronique de contrôle moteur qui détermine la puissance totale disponible en sortie du moteur du véhicule, une unité de calcul électronique capable d'estimer la puissance absorbée par l'installation de climatisation embarquée sur le véhicule, et une unité de calcul électronique gérant la commande de la transmission.

Les transmissions automatiques, à rapports étagés ou non, munies d'un convertisseur de couple associé à un train épicycloïdal ou à un variateur, de même que les transmissions semi-automatiques disposant d'un embrayage piloté électroniquement à l'entrée d'une boîte de vitesses à engrenages, robotisée ou non, sont contrôlées par un calculateur qui échange des informations avec plusieurs autres organes du véhicule, pour mettre en oeuvre des stratégies de commande des passages de vitesses.

Dans le cas des transmissions automatiques ou automatisées, ces stratégies prennent en charge les décisions de changement de rapport, alors que ces mêmes décisions restent à l'initiative du conducteur dans le cas des transmissions semi-automatiques. Dans les deux cas, le calculateur associé à transmission gère cependant le déroulement des démarrages et des changements de vitesse, en vue d'optimiser ces opérations.

Un des principaux problèmes qui se pose sur les transmissions automatiques à rapports étagés étant celui de la qualité des passages de vitesses sous couple, certaines stratégies développées dans les calculateurs de boîtes de vitesses automatiques visent à réduire les temps de passage sans dégrader pour autant le confort du véhicule, en transmettant des signaux de modulation de couple appropriés au calculateur de contrôle du moteur.

D'autres stratégies de contrôle des transmissions automatiques visent par exemple à réduire le couple moteur dans les premiers instants du démarrage du véhicule, pour adoucir le pic de couple résultant du fonctionnement caractéristique du convertisseur.

D'une façon générale, lors de tous les événements qualifiés de passage dans une transmission automatique (changement de rapport, entrée ou sortie de débrayage à l'arrêt, etc...), son calculateur doit connaître de façon aussi précise que possible le couple appliqué à l'entrée du convertisseur.

Selon les dispositions habituelles dans ce domaine, le calculateur d'une boîte de vitesses automatique contient une cartographie du couple moteur en fonction du régime et de la charge (ouverture du papillon des gaz sur les moteurs à essence, ou position du levier de charge sur les moteurs Diesel). L'information «couple moteur» est donc normalement lue sur cette cartographie par le calculateur de la boîte.

Lorsqu'un véhicule est pourvu d'équipements ou d'accessoires fortement consommateurs de puissance moteur, tels qu'une installation de climatisation, dont l'enclenchement est aléatoire par rapport au fonctionnement du moteur et de la transmission, les cartographies de couple moteur, aussi précises soient-elles, ne reflètent cependant pas la réalité du couple moteur net disponible à l'entrée de la transmission.

En effet, en l'absence d'information relative au couple absorbé par l'installation de climatisation, il existe un décalage entre le couple indiqué par la cartographie, et le couple réellement appliqué à l'entrée du convertisseur, lorsque le compresseur de la climatisation est actif.

Dans une transmission semi-automatique, où un actionneur, le plus souvent hydraulique, reçoit parmi différentes informations relatives au véhicule, à son allure, et aux intentions du conducteur, un signal de charge du moteur, destiné à gérer la progressivité du serrage et du relâchement de l'embrayage, tout phénomène imprévisible et non contrôlable au niveau de la boîte ou du moteur, tel que le prélèvement de couple par le compresseur de climatisation, entraîne également des à-coups de couple pendant les phases transitoires de démarrage et de retour à l'arrêt du véhicule, de même que pendant les changements de rapport.

Lorsque la puissance absorbée par la climatisation ne peut pas être évaluée, notamment avec les compresseurs à cylindrée fixe de type classique, il est impossible d'introduire une correction appropriée dans la valeur du couple moteur déterminée à partir des cartographies du calculateur de la transmission. La solution adoptée habituellement pour éviter que le déroulement des changements d'état d'une transmission automatique, ou que le pilotage d'un embrayage de transmission semi-automatique, ne soient perturbés par l'absorption d'une partie de la puissance disponible au niveau du climatiseur, consiste à couper de façon temporaire le fonctionnement du compresseur de la climatisation pendant les changements d'état de la transmission.

Cette solution permet au calculateur de la transmission de connaître avec précision le couple qui est transmis à celle-ci pendant ses changements d'état, mais elle présente le double inconvénient de perturber le fonctionnement du climatiseur et de soumettre la transmission aux variations de couple liées à l'interruption temporaire des prélèvements du climatiseur.

US 5241855 montre les caractéristiques du préambule de la revendication 1.

Etant donné que certaines dispositions connues, illustrées notamment par la publication FR-A-2.711.731, permettent aujourd'hui de disposer en permanence d'une estimation de la puissance absorbée par la climatisation d'un véhicule, la présente invention propose de faire bénéficier directement le calculateur de la transmission de cette information, pour optimiser le contrôle de son couple d'entrée.

Elle prévoit à cet effet que le calculateur de contrôle moteur transmet au calculateur de la transmission une valeur de couple moteur disponible tenant compte du couple absorbé par l'installation de climatisation.

Le calculateur de la transmission disposant ainsi en permanence d'une «information couple», corrigée par la puissance absorbée P.A. au niveau du climatiseur, il devient possible de renoncer aux mesures de coupure et de remise en marche du climatiseur mises en oeuvre selon la technique antérieure.

La correction en question est réalisée sur la base du calcul de puissance P.A absorbée dans le climatiseur, effectué par exemple par le calculateur de climatisation 3.

Pour supprimer les perturbations de la transmission liées aux variations du couple prélevé par le climatiseur, l'invention prévoit également que le calculateur de la transmission énvoie au calculateur de climatisation une information permettant de figer l'alimentation électrique du compresseur de climatisation au cours de certaines phases de fonctionnement de la transmission.

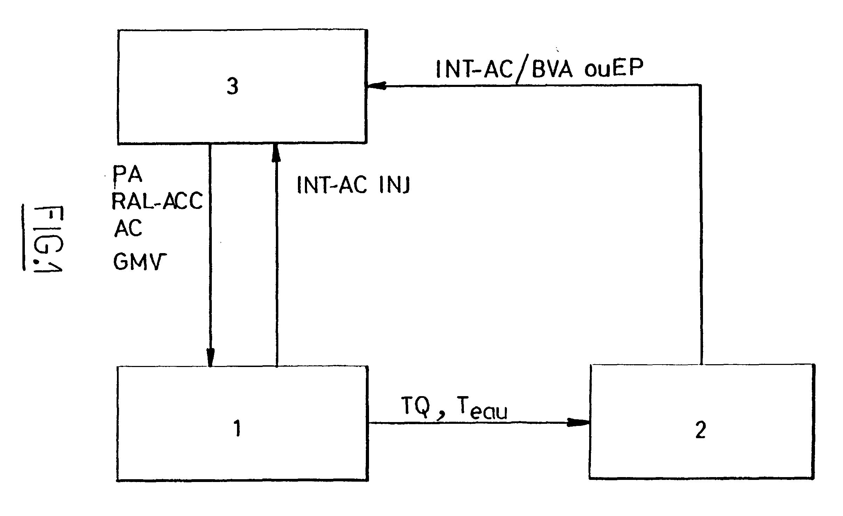

D'autres caractéristiques et avantages de l'invention apparaîtront clairement à la lecture de la description suivante d'un mode de réalisation particulier de celle-ci, en liaison avec le dessin annexé, sur lequel :
- la figure unique est un schéma fonctionnel simplifié de l'invention.

Sur le schéma, les trois blocs 1, 2 et 3, correspondent respectivement à un calculateur de contrôle moteur 1, à un calculateur de transmission 2, tel qu'un calculateur de boîte de vitesses automatique à rapports étagés, de boîte de vitesses automatique à variation continue, de boîte de vitesses robotisée, ou d'embrayage piloté, et à un calculateur de climatisation 3.

Comme indiqué ci-dessus, le procédé de l'invention s'applique à un véhicule automobile comportant de façon classique un calculateur de contrôle moteur muni de circuits électroniques lui permettant notamment de traiter des signaux en provenance de capteurs adaptés pour déterminer les états du moteur, et de générer des signaux de commande du moteur destinés à optimiser son fonctionnement.

Par ailleurs, ce premier calculateur 1 contrôle en permanence le fonctionnement du climatiseur, en envoyant au calculateur de climatisation 3, un signal INT-AC/INJ de type binaire, autorisant ou interdisant, selon son état, la commande de l'embrayage du compresseur du climatiseur. Il transmet également au calculateur de la transmission 2, la valeur de couple TQ fourni par le moteur à l'arbre d'entrée de la transmission, ainsi que la température d'eau Tₑₐᵤ du moteur.

Selon des dispositions également connues, le calculateur de climatisation 3 peut transmettre au calculateur de contrôle moteur 1 une estimation de la puissance P.A absorbée dans le climatiseur, notamment par son compresseur à cylindrée variable, et par son groupe moto-ventilateur, ainsi que des signaux de demande d'autorisation de ralenti ou d'accélération du compresseur (RAL-ACC), et des signaux de demande de mise en marche ou d'arrêt de l'alimentation électrique de l'embrayage du compresseur (AC), et des signaux de demande de changement d'état du groupe moto-ventilateur (GMV) du climatiseur.

Conformément à l'invention, le calculateur de la transmission 2, transmet au calculateur de climatisation 3 un signal de commande binaire INT-AC/BVA ou EP, dont une valeur est un ordre d'interdiction de changement d'état d'alimentation électrique du climatiseur. Cet ordre est transmis pendant certaines phases de changement d'état de la transmission, telles que les changements de rapports, les démarrages, l'entrée ou la sortie de la situation de débrayage à l'arrêt, si le véhicule est équipé d'une boîte de vitesses automatique, ou encore la manoeuvre de l'actionneur d'embrayage, si le véhicule est équipé d'un système d'embrayage piloté électroniquement, associé à une boîte de vitesses à engrenages, robotisée ou non.

Ce signal d'interdiction temporaire vise à figer l'état de l'alimentation électrique du climatiseur dans certaines circonstances, telles que des phases transitoires du fonctionnement de la transmission, où il est particulièrement utile de maîtriser son couple d'entrée, car toute variation imprévue de celui-ci perturbe considérablement leur déroulement. En particulier, il permet que pendant les changements d'état de la transmission, les demandes de changement d'état du compresseur, (RAL-ACC), de son embrayage (AC) ou du groupe moto-ventilateur (GMV), transmises par le calculateur de climatisation 3 au calculateur de contrôle moteur contrôle moteur 1, sont interrompues.

Pour obtenir la maîtrise complète du couple d'entrée de la transmission, l'invention prévoit également que le calculateur de contrôle moteur 1 corrige la valeur TQ qu'il transmet au calculateur 2, en soustrayant à la valeur du couple réel mesurée en sortie du vilebrequin, la valeur du couple prélevé par le climatiseur, dont il a connaissance à partir de l'information de puissance P.A. transmise par exemple par le calculateur de climatisation 3.

Dans ces conditions, non seulement le calculateur de la transmission dispose en permanence d'une valeur de couple d'entrée qui correspond exactement au couple fourni à l'arbre d'entrée de la transmission, mais cette dernière se trouve à l'abri des variations imprévues de son couple d'entrée, liées au fonctionnement du climatiseur.

Comme indiqué plus haut, l'invention s'applique avantageusement sur des véhicules équipés de tout type de transmission automatique, semi-automatique, ou automatisée. Dans le cas des boîtes de vitesses automatiques à rapports étagés, elle permet notamment d'effectuer les changements de rapport sous un couple constant. Enfin, sans sortir du cadre de l'invention, on peut prévoir que le calcul de la puissance absorbée PA dans le climatiseur soit effectué par un autre calculateur que le calculateur de climatisation, notamment par le calculateur de contrôle moteur du véhicule.

## Revendications

1. Procédé de contrôle du couple d'entrée d'une transmission pour véhicule routier du type comportant un calculateur de contrôle moteur (1) qui détermine la puissance totale disponible en sortie du moteur du véhicule, un calculateur de climatisation (3) capable d'estimer la puissance absorbée par l'installation de climatisation embarquée sur le véhicule, et un calculateur de transmission (2) gérant la commande la transmission, le calculateur de contrôle moteur transmettant au calculateur de la transmission une valeur de couple moteur disponible tenant compte du couple absorbé par l'installation de climatisation, **caractérisé en ce que** le calculateur de la transmission envoie au calculateur de climatisation une information permettant de figer l'état de l'alimentation électrique du climatiseur, au cours de certaines phases de fonctionnement de la transmission.

2. Procédé de contrôle selon la revendication 1, **caractérisé en ce que** le calculateur de climatisation calcule la puissance absorbée dans le compresseur de climatisation.

3. Procédé de contrôle selon la revendication 1 ou 2, **caractérisé en ce que** l'information reçue par le calculateur de climatisation (3) est un signal binaire, dont une des deux valeurs correspond aux changements d'état de la transmission.

4. Procédé de contrôle selon la revendication 3, **caractérisé en ce que** les demandes de changement d'état de l'alimentation électrique du climatiseur par le calculateur de climatisation (3) sont interrompues pendant les changements d'état de la transmission.

5. Procédé de contrôle selon l'une des revendications précédentes, **caractérisé en ce que** la transmission comporte une boîte de vitesses automatique à variation continue.

6. Procédé de contrôle selon l'une des revendications 1 à 4, **caractérisé en ce que** la transmission comporte une boîte de vitesses automatique à rapports étagés.

7. Procédé de contrôle selon l'une des revendications 1 à 4, ou 6, **caractérisé en ce que** l'alimentation électrique du climatiseur est figée pendant les changements de rapport de la boîte de vitesses.

8. Procédé de contrôle selon l'une des revendications 1 à 4, 6 ou 7 **caractérisé en ce que** la transmission comporte un embrayage piloté électroniquement, dont la manoeuvre fige l'alimentation électrique du compresseur de climatisation.

9. Procédé de contrôle selon l'une des revendications 1 à 4, 6, 7, ou 8 **caractérisé en ce que** les changements de rapports s'effectuent sous un couple constant.

## Patentansprüche

1. Verfahren zur Kontrolle des Eingangsdrehmoments eines Getriebes für ein Straßenfahrzeug von der Art, umfassend einen Rechner zur Motorsteuerung (1), der die am Ausgang des Fahrzeugmotors verfügbare Gesamtleistung bestimmt, einen Rechner der Klimaanlage (3), der die von der im Fahrzeug befindlichen Klimaanlage aufgenommene Leistung abschätzen kann, und einen Rechner des Getriebes (2), der das Getriebe steuert, wobei der Rechner zur Motorsteuerung dem Rechner des Getriebes einen Wert des verfügbaren Motordrehmoments unter Berücksichtigung des von der Klimaanlage aufgenommenen Drehmoments übermittelt, **dadurch gekennzeichnet, daß** der Rechner des Getriebes dem Rechner der Klimaanlage eine Information sendet, die ein Einfrieren des Zustands der Stromversorgung des Klimageräts während bestimmter Betriebsphasen des Getriebes gestattet.

2. Verfahren zur Kontrolle nach Anspruch 1, **dadurch gekennzeichnet, daß** der Rechner der Klimaanlage die in dem Kompressor der Klimaanlage aufgenommene Leistung berechnet.

3. Verfahren zur Kontrolle nach Anspruch 1 oder 2, **dadurch gekennzeichnet, daß** die von dem Rechner der Klimaanlage (3) empfangene Information ein binäres Signal ist, dessen einer der zwei Werte den Zustandsänderungen des Getriebes entspricht.

4. Verfahren zur Kontrolle nach Anspruch 3, **dadurch gekennzeichnet, daß** die Anforderungen einer Zustandsänderung der Stromversorgung des Klimageräts durch den Rechner der Klimaanlage (3) während der Zustandsänderungen des Getriebes unterbrochen werden.

5. Verfahren zur Kontrolle nach einem der vorhergehenden Ansprüche, **dadurch gekennzeichnet, daß** das Getriebe ein stufenloses automatisches Wechselgetriebe umfaßt.

6. Verfahren zur Kontrolle nach einem der Ansprüche 1 bis 4, **dadurch gekennzeichnet, daß** das Getriebe ein automatisches Wechselgetriebe mit abgestuften Gängen umfaßt.

7. Verfahren zur Kontrolle nach einem der Ansprüche 1 bis 4 oder 6, **dadurch gekennzeichnet, daß** die Stromversorgung des Klimageräts während der Gangwechsel des Wechselgetriebes eingefroren wird.

8. Verfahren zur Kontrolle nach einem der Ansprüche 1 bis 4, 6 oder 7, **dadurch gekennzeichnet, daß** das Getriebe eine elektronisch gesteuerte Kupplung umfaßt, deren Betätigung die Stromversorgung des Kompressors der Klimaanlage einfriert.

9. Verfahren zur Kontrolle nach einem der Ansprüche 1 bis 4, 6, 7 oder 8, **dadurch gekennzeichnet, daß** die Gangwechsel unter konstantem Drehmoment erfolgen.

## Claims

1. A method of controlling the input torque of a transmission for a road vehicle of the type comprising an engine control computer (1) which calculates the total power available as output from the vehicle engine, an air conditioning computer (3) capable of estimating the power absorbed by the air conditioning plant of the vehicle and a transmission computer (2) managing the control of the transmission, the engine control computer transmitting an available engine torque value, taking account of the torque absorbed by the air conditioning plant, to the transmission computer, **characterised in that** the transmission computer supplies the air conditioning computer with information making it possible to fix the state of electrical supply of the air conditioning during certain stages of operation of the transmission.

2. A control method as claimed in claim 1, **characterised in that** the air conditioning computer calculates the power absorbed by the air conditioning compressor.

3. A control method as claimed in claim 1 or 2, **characterised in that** the information received by the air conditioning computer (3) is a binary signal, one of whose two values corresponds to changes of state of the transmission.

4. A control method as claimed in claim 3, **characterised in that** requests for a change of state of the electrical supply of the air conditioning by the air conditioning computer (3) are discontinued during changes of state of the transmission.

5. A control method as claimed in one of the preceding claims, **characterised in that** the transmission comprises a continuous variation automatic gearbox.

6. A control method as claimed in one of claims 1 to 4, **characterised in that** the transmission comprises a staged-ratio automatic gearbox.

7. A control method as claimed in one of claims 1 to 4, or 6, **characterised in that** the electrical supply of the air conditioning is fixed during the changes of ratio of the gearbox.

8. A control method as claimed in one of claims 1 to 4, 6 or 7, **characterised in that** the transmission comprises an electronically piloted clutch, whose manoeuvre fixes the electrical supply of the air conditioning compressor.

9. A control method as claimed in one of claims 1 to 4, 6, 7 or 8, **characterised in that** the changes of ratio take place under constant torque.
